# EUROPEAN PATENT SPECIFICATION

(11) **EP 3 508 720 B1**
(45) Date of publication and mention of the grant of the patent: **17.06.2020**
(21) Application number: 18150807.8
(22) Date of filing: 09.01.2018
(51) Int. Cl.: F03D 80/60, F03D 80/80

(54) **WIND TURBINE INCLUDING A COOLING CIRCUIT**
WINDTURBINE MIT EINEM KÜHLKREISLAUF
ÉOLIENNE COMPORTANT UN CIRCUIT DE REFROIDISSEMENT

(43) Date of publication of application: 10.07.2019
(73) Proprietor: Siemens Gamesa Renewable Energy A/S, 7330 Brande (DK)
(72) Inventor: Groenheden, Ebbe, 8700 Horsens (DK)
(74) Representative: Aspacher, Karl-Georg

(56) References cited:
- EP-A1- 2 163 761
- EP-A1- 3 236 065
- WO-A1-2014/187507
- US-A1- 2015 372 565
- US-A1- 2017 074 251

## Description

### Field of invention

The present invention relates to a wind turbine including an electric generator driven by the blades of the wind turbine. The wind turbine also includes a cooling circuit for channeling a cooling medium to the generator.

### Art Background

In the above described technical field, the electric generator and, in particular, the stator and the rotor have to be cooled, in order to optimize its efficiency and achieve the highest possible value of generated electric power. Various air cooling systems are known in the art for cooling the electric generator in a wind turbine including a nacelle.

The electric generator extends axially between a drive end (DE), connected to the driving device (i.e. the wind rotor with blades of the wind turbine) and an axially opposite non-drive end (NDE). The cooling medium for cooling the non-drive end of the electric generator is normally air which is present inside the nacelle of the wind turbine. Such air enters the nacelle through a cooling intake to which a filter and fan unit are associated. Such solution avoids that the moisture and salt content in the ambient air enter the electric generator, thus causing corrosion and consequently limiting the life of the electric generator.

Another alternative solution may be that of forming a cooling circuit from the ambient to the electric generator through the nacelle. Also in this case the cooling circuit is provided with filtering means and fans. Both types of solutions may be more or less efficient, but both of them cannot be considered optimal, as far as costs an simplicity of the overall design of the wind turbine are concerned.

There may be therefore still a need for providing a wind turbine including an electric generator and a cooling circuit for cooling efficiently the electric generator, at the same time minimizing the risk of corrosion and reducing the costs with respect to know solutions of wind turbines. Documents US 2017/074251 A1, EP 3 236 065 A1, US 2015/372565 A1 and WO 2014/187507 A1 describe wind turbines according to the prior art.

### Summary of the Invention

This need is met by the subject matter according to the independent claim. Advantageous embodiments of the present invention are described by the dependent claims.

According to the invention there is provided a wind turbine according to claim 1 comprising:
an electric generator having a stator and a rotor and longitudinally extending along a longitudinal axis between a non-drive end and an opposite drive end,
a cooling circuit for cooling the electric generator, wherein the electric generator comprises an housing having at least a first plate at the non-drive end for separating an inside of the electric generator from an ambient environment, the cooling circuit including at least an inlet on the first plate for letting air from the ambient environment to enter the inside of the electric generator, the inlet being provided with a respective filter.
Advantageously, the first plate at the non-drive end permits separating an inside of the electric generator from an ambient environment. The filter provided at the air inlet permits to control the quality of air entering the electric generator, in particular blocking salt, moisture or dirt, as required by the operating conditions. Such arrangement permits to completely avoid installing a nacelle between the tower of the wind turbine and the electric generator, thus reducing the costs of the installation.
In embodiments of the present invention the first plate is fixed with respect to the stator of the electric generator and brushes are provided at the interface between the first plate and the rotor of the electric generator for limiting the amount of unfiltered air entering the inside of the electric generator. This further permits to control the quality of air entering the electric generator.
The present invention may be particularly adapted to direct drive electric generator, i.e. having the wind rotor including the hub and the blades directly attached to the drive end of the electric generator, without any interposed connection means.

According to embodiments of the invention, the housing has at least a second plate at the drive end for separating an inside of the electric generator from an outside environment, the cooling circuit including at least a second inlet on the second plate for letting air from the outside environment to enter the inside of the electric generator, the second inlet being provided with a respective filter. The outside environment may be comprised between a hub and a spinner of the wind turbine. Such feature provides a similar end structures at both the drive and non-drive ends of the electric generator. Particularly, the first plate and/or the second plate may be orthogonal to the longitudinal axis.

According to possible embodiments of the invention, the cooling circuit comprises at least a first cooling cavity inside the housing of the electric generator between the first plate and the stator. Further, the cooling circuit may comprise a second cooling cavity inside the housing of the electric generator between the second plate and the stator.
The above cooling scheme may be further integrated by shaping the cooling circuit so that the fluid cooling medium is channeled to the air gap between the stator and the rotor.

According to embodiments of the invention, the heated cooling medium downstream the air gap of the electric generator is made flow through an exhaust pipe for letting the heated cooling medium to flow to the outlet environment. The exhaust pipe may be in particular provided on the first plate, i.e. at the non-drive end of the electric generator.

According to embodiments of the invention, the first plate and/or the second plate comprise hatch doors for permitting access to the first cooling cavity and or the second cooling cavity of the housing. The filters may be mounted on the hatch doors in order to be easily removed from the housing of the electric generator together with the hatch doors.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited, the scope of protection being defined by the appended claims.

### Brief Description of the Drawing

- Figure 1: shows a schematic section of an upper of a wind turbine according to the present invention.
- Figure 2: shows a schematic detail of the wind turbine of figure 1.
- Figure 3: shows a schematic rear view of the wind turbine of figure 1.

### Detailed Description

The illustrations in the drawings are schematic. It is noted that in different figures, similar or identical elements are provided with the same reference signs.

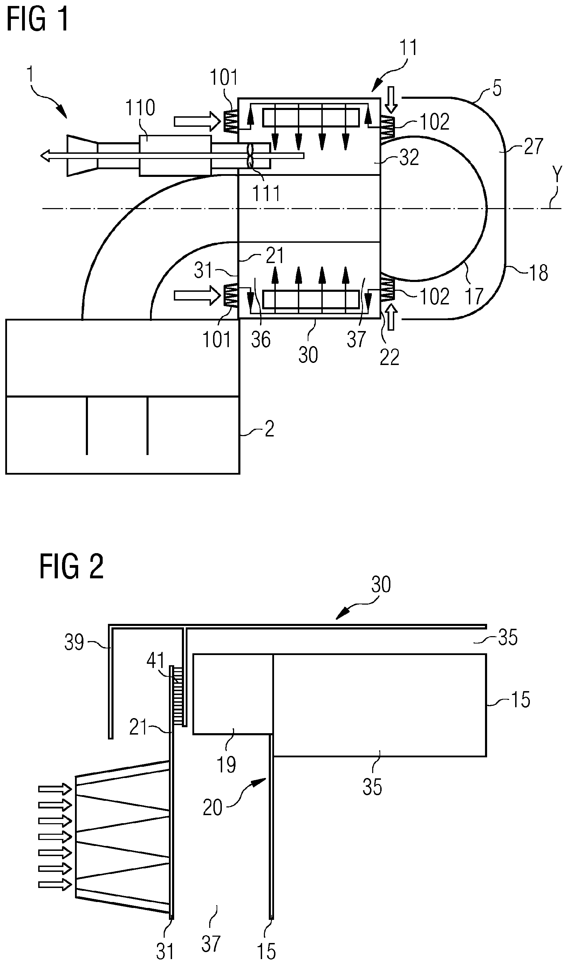

**Figures 1** and **2** show a wind turbine 1 having an electric generator 11 according to the present invention. The wind turbine 1 comprises a tower 2, which is mounted on a non-depicted fundament. The electric generator 11 is arranged on top of the tower 2. The electric generator 11 extends along a longitudinal axis Y between a longitudinal non-drive end 31 and an opposite drive end 32 and, in accordance with the basic principles of electric engineering, comprises a stator 20 and a rotor 30.
When not differently specified, the terms axial, radial and circumferential in the following are made with reference to the longitudinal axis Y.
In the embodiment of the attached figures, the rotor 30 is radially external with respect the stator 20 and rotatable about the longitudinal axis Y.
According to other possible embodiments of the present invention (not represented in the attached figures), the rotor 30 is radially internal with respect the stator 20 and rotatable about the rotational axis Y.
The wind turbine 1 further comprises a wind rotor 5 having a hub 17, three blades (not represented in the attached drawings) attached to the hub 17 and a spinner 18, which is external and distances from the hub 17 and connects the blades. The electric generator 11 is of the direct drive type, i.e. the wind rotor 5 is directly connected to the rotor 30 at the drive end 32 in order to be rotatable around the longitudinal axis Y.
The electric generator 11 comprises a housing 12 having a first plate 21 at the non-drive end 31 for separating an inside of the electric generator 11 from an ambient environment and a second plate 22 at the drive end 32 for separating an inside of the electric generator 11 from an outside environment 27, comprised between the hub 17 and the spinner 18. The first plate 21 and the second plate 22 are fixed with respect to the stator 20.
The first plate 21 and the second plate 22 are orthogonal to the longitudinal axis Y.
Along a circumferential periphery, the housing 12 is delimited by the rotor 30.

The stator 20 is housed inside the housing 12, between the first plate 21 and the second plate 22 and comprises a stator support 15 for radially supporting a stator body 13. The stator body 13 comprises a plurality of laminations (not shown in the attached figures) stacked along the longitudinal axis Y. The stacked laminations define a plurality of teeth (not shown in the attached figures) protruding according to a radial direction and a plurality of slots (not shown in the attached figures) interposed between the teeth. The slots host a plurality of coils having coil ends 19, protruding axially from the stator body 13. The coil ends 19 are axially comprised between the stator body 13 and the first plate 21 or the second plate 22.
Around a circumferentially border of the stator 20 an air gap 35 is provided between the stator 20 and the rotor 30. In operation the temperature in the air gap 35 rises. Such temperature has to be controlled beyond a limit to assure to keep the efficiency of the generator within acceptable values.
To achieve such scope, the wind turbine 1 comprises a cooling circuit 100 for channeling a fluid cooling medium to the air gap 35 and channeling the same fluid cooling medium away from the air gap 35, after it has been heated in the air gap 35. The same cooling medium is used for cooling the stator body 13, the stator support 15 and the coil ends 19.
The cooling medium is air from the ambient environment.
The cooling circuit 100 includes one or more first inlets 101 on the first plate 21 for letting air from the ambient environment to enter the inside of the housing 12 of the electric generator 11 and one or more second inlets 102 on the second plate 22 for letting air from the outside environment to enter the inside of the housing 12.
In the embodiment of the attached figure 1, two first inlets 101 are visible on the first plate 21 and two second inlets 102 are visible on the second plate 22.
The inlets 101, 102 are provided with respective filters 25 for controlling the quality of air entering the electric generator, in particular blocking salt, moisture or dirt, as required by the operating conditions.
Brushes 41 are provided at the interface between the first plate 21 and the rotor 30 and at the interface between the second plate 22 and the rotor 30 for limiting the amount of unfiltered air entering the inside of the electric generator 11, from the ambient environment and the external environment 27.
The brushes 41 forces the cooling medium, or the least most part of it, to enter the housing 12 through the inlets 101, 102 and the filter 25. In such a way salt, moisture or dirt are further prevented from entering the housing 12.
The cooling circuit 100 comprises downstream the first inlets 101 a first cooling cavity 36 inside the housing 12 of the electric generator 11. The first cooling cavity 36 is provided between the first plate 21 and the stator 20.
The cooling circuit 100 further comprises downstream the second inlets 102 a second cooling cavity 37 inside the housing 12 of the electric generator 11. The second cooling cavity 37 is provided between the second plate 22 and the stator 20. The cooling medium in the cooling cavities 36, 37 is used for cooling the stator body 13, the stator support 15 and the coil ends 19. Downstream the cooling cavities 36, 37, the cooling circuit 100 is shaped for channeling the fluid cooling medium to the air gap 35 between the stator 20 and the rotor 30.
After the fluid cooling medium has been heated in the air gap 35 and by contact with the stator body 13, the stator support 15 and the coil ends 19, the same fluid cooling medium is channeled outside the housing 12 to the ambient environment through an exhaust pipe 110 crossing the first plate 21 and attached thereto. In the exhaust pipe 110 one or more exhaust fans 111 are provided for making the heated fluid cooling medium flow to the ambient environment.
The design of the electric generator 11 according to the present invention, permits to efficiently cooling the inside of the housing 12 and to remove the heated fluid cooling medium from the inside of the housing 12, without using any nacelle between the tower 2 and the electric generator 11.

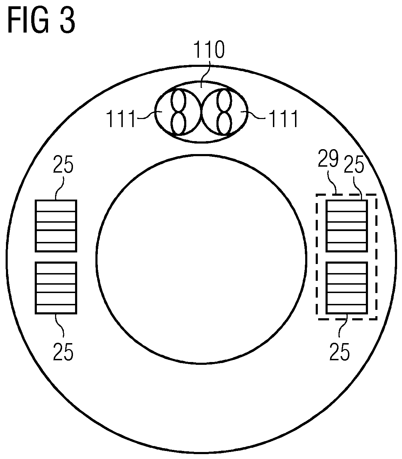

With specific reference to **figure 2****,** the rotor 30 protrudes axially with respect to at least one of the first plate 21 and the second plate 22 and comprises at one or both of its axial end a brake disk 39 including a rotor lock for locking the rotation of the rotor 30 with respect to the stator 20 when required by the operating conditions.
With specific reference to **figure 3****,** the first plate 21 comprises hatch doors 29 for permitting access to the first cooling cavity 36 of the housing 12. The filters 25 of the first inlets 101 are mounted on the hatch doors 29, thus permitting their easy removal.
Such arrangement may be provided also on the second plate 22, which may comprise hatch doors (not shown in the attached figures) for permitting access to the second cooling cavity 37 of the housing 12.

## Claims

1. Wind turbine (1) comprising:
an electric generator (11) having a stator (20) and a rotor (30) and extending along a longitudinal axis (Y) between a non-drive end (31) and an opposite drive end (32),
a cooling circuit (100) for cooling the electric generator (11),
wherein the electric generator (11) comprises an housing (12) having at least a first plate (21) at the non-drive end (31) for separating an inside of the electric generator (11) from an ambient environment, the cooling circuit (100) including at least one first inlet (101) on the first plate (21) for letting air from the ambient environment to enter the inside of the electric generator (11),
**characterized in that**
the at least one first inlet (101) is provided with a respective filter (25) for controlling the quality of air entering the electric generator (11) through the at least one first inlet (101).

2. The wind turbine (1) of claim 1, wherein the first plate (21) is fixed with respect to the stator (20) of the electric generator (11).

3. The wind turbine (1) of claim 2, wherein brushes (41) are provided at the interface between the first plate (21) and the rotor (30) and/or between the second plate (22) and the rotor (30) for limiting the amount of unfiltered air entering the inside of the electric generator (11).

4. The wind turbine (1) of any of the previous claims 1 to 3, wherein the housing (12) has at least a second plate (22) at the drive end (32) for separating an inside of the electric generator (11) from an outside environment, the cooling circuit (100) including at least a second inlet (102) on the second plate (22) for letting air from the outside environment to enter the inside of the electric generator (11), the second inlet (102) being provided with a respective filter (25).

5. The wind turbine (1) of claim 4, wherein the outside environment is comprised between a hub (17) and a spinner (18) of the wind turbine (1).

6. The wind turbine (1) of any of the previous claims, wherein the first plate (21) and/or the second plate (22) are orthogonal to the longitudinal axis (Y).

7. The wind turbine (1) of any of the previous claims, wherein the cooling circuit (100) comprises at least a first cooling cavity (36) inside the housing (12) of the electric generator (11), between the first plate (21) and the stator (20) .

8. The wind turbine (1) of any of the previous claims, wherein the cooling circuit (100) comprises a second cooling cavity (37) inside the housing (12) of the electric generator (11), between the second plate (22) and the stator (20).

9. The wind turbine (1) of any of the previous claims, wherein the wind turbine (1) has an air gap (35) between the stator (20) and the rotor (30), the cooling circuit (100) being shaped for channeling the fluid cooling medium to the air gap (35) between the stator (20) and the rotor (30).

10. The wind turbine (1) of any of the previous claims, wherein the cooling circuit (100) comprises an exhaust pipe (110) for letting the heated cooling medium to flow to the outlet environment.

11. The wind turbine (1) of claim 10, wherein the exhaust pipe (110) is provided on the first plate (21).

12. The wind turbine (1) of any of the claims 7 to 11, wherein the first plate (21) and/or the second plate (22) comprise hatch doors (29) for permitting access to the first cooling cavity (36) and or the second cooling cavity (37) of the housing (12).

13. The wind turbine (1) of claim 12, wherein any of the filters (25) is mounted on one of the hatch doors (29).

14. The wind turbine (1) of any of the previous claims, wherein the electric generator (11) is a direct drive generator having the hub (17) directly attached to the drive end of the electric generator (11).

## Patentansprüche

1. Windenergieanlage (1), die Folgendes umfasst:
einen elektrischen Generator (11) mit einem Stator (20) und einem Rotor (30), wobei der elektrische Generator eine Längsachse (Y) zwischen einer Nichtantriebsseite (31) und einer gegenüberliegenden Antriebsseite (32) entlang verläuft,
einen Kühlkreislauf (100) zum Kühlen des elektrischen Generators (11),
wobei der elektrische Generator (11) ein Gehäuse (12) mit zumindest einer ersten Platte (21) auf der Nichtantriebsseite (31) zum Trennen des Inneren des elektrischen Generators (11) von einer Umgebung umfasst, wobei der Kühlkreislauf (100) an der ersten Platte (21) mindestens einen ersten Einlass (101) zum Einströmenlassen von Luft aus der Umgebung in das Innere des elektrischen Generators (11) aufweist,
**dadurch gekennzeichnet, dass**
der mindestens eine erste Einlass (101) mit einem jeweiligen Filter (25) zum Regeln der Qualität der über den mindestens einen ersten Einlass (101) in den elektrischen Generator (11) einströmenden Luft ausgestattet ist.

2. Windenergieanlage (1) nach Anspruch 1, wobei die erste Platte (21) in Bezug auf den Stator (20) des elektrischen Generators (11) fest ist.

3. Windenergieanlage (1) nach Anspruch 2, wobei an der Grenzfläche zwischen der ersten Platte (21) und dem Rotor (30) und/oder zwischen der zweiten Platte (22) und dem Rotor (30) Bürsten (41) zum Begrenzen der Menge an ungefilterter Luft vorgesehen sind, die in das Innere des elektrischen Generators (11) strömen kann.

4. Windenergieanlage (1) nach einem der vorhergehenden Ansprüche 1 bis 3, wobei das Gehäuse (12) auf der Antriebsseite (32) zumindest eine zweite Platte (22) zum Trennen des Inneren des elektrischen Generators (11) von einer Außenumgebung aufweist, wobei der Kühlkreislauf (100) an der zweiten Platte (22) zumindest einen zweiten Einlass (102) zum Einströmenlassen von Luft aus der Außenumgebung in das Innere des elektrischen Generators (11) aufweist, wobei der zweite Einlass (102) mit einem jeweiligen Filter (25) ausgestattet ist.

5. Windenergieanlage (1) nach Anspruch 4, wobei sich die Außenumgebung zwischen einer Nabe (17) und einem Spinner (18) der Windenergieanlage (1) befindet.

6. Windenergieanlage (1) nach einem der vorhergehenden Ansprüche, wobei die erste Platte (21) und/oder die zweite Platte (22) senkrecht zur Längsachse (Y) verlaufen.

7. Windenergieanlage (1) nach einem der vorhergehenden Ansprüche, wobei der Kühlkreislauf (100) zwischen der ersten Platte (21) und dem Stator (20) zumindest einen ersten Kühlhohlraum (36) in dem Gehäuse (12) des elektrischen Generators (11) umfasst.

8. Windenergieanlage (1) nach einem der vorhergehenden Ansprüche, wobei der Kühlkreislauf (100) zwischen der zweiten Platte (22) und dem Stator (20) einen zweiten Kühlhohlraum (37) in dem Gehäuse (12) des elektrischen Generators (11) umfasst.

9. Windenergieanlage (1) nach einem der vorhergehenden Ansprüche, wobei die Windenergieanlage (1) zwischen dem Stator (20) und dem Rotor (30) einen Luftspalt (35) aufweist, wobei der Kühlkreislauf (100) zum Leiten des Fluidkühlmittels zu dem Luftspalt (35) zwischen dem Stator (20) und dem Rotor (30) geformt ist.

10. Windenergieanlage (1) nach einem der vorhergehenden Ansprüche, wobei der Kühlkreislauf (100) ein Abzugsrohr (110) zum Ausströmenlassen des erwärmten Kühlmittels in die Außenumgebung umfasst.

11. Windenergieanlage (1) nach Anspruch 10, wobei das Abzugsrohr (110) an der ersten Platte (21) vorgesehen ist.

12. Windenergieanlage (1) nach einem der Ansprüche 7 bis 11, wobei die erste Platte (21) und/oder die zweite Platte (22) Einstiegsluken (29) umfasst, die Zugang zu dem ersten Kühlhohlraum (36) und/oder dem zweiten Kühlhohlraum (37) des Gehäuses (12) gewähren.

13. Windenergieanlage (1) nach Anspruch 12, wobei einer der Filter (25) an einer der Einstiegsluken (29) angebracht ist.

14. Windenergieanlage (1) nach einem der vorhergehenden Ansprüche, wobei es sich bei dem elektrischen Generator (11) um einen direktangetriebenen Generator handelt, bei dem die Nabe (17) direkt an der Antriebsseite angebracht ist.

## Revendications

1. Éolienne (1) comprenant :
un générateur électrique (11) ayant un stator (20) et un rotor (30) et s'étendant le long d'un axe longitudinal (Y) entre une extrémité de non-entraînement (31) et une extrémité d'entraînement opposée (32),
un circuit de refroidissement (100) pour refroidir le générateur électrique (11),
dans lequel le générateur électrique (11) comprend un carter (12) ayant au moins une première plaque (21) à l'extrémité de non-entraînement (31) pour séparer un intérieur du générateur électrique (11) par rapport à un environnement ambiant, le circuit de refroidissement (100) incluant au moins une première entrée (101) sur la première plaque (21) pour laisser de l'air provenant de l'environnement ambiant entrer à l'intérieur du générateur électrique (11),
**caractérisée en ce que**
l'au moins une première entrée (101) est munie d'un filtre respectif (25) pour contrôler la qualité de l'air entrant dans le générateur électrique (11) à travers l'au moins une première entrée (101).

2. Éolienne (1) selon la revendication 1, dans laquelle la première plaque (21) est fixe par rapport au stator (20) du générateur électrique (11).

3. Éolienne (1) selon la revendication 2, dans laquelle des balais (41) sont ménagés à l'interface entre la première plaque (21) et le rotor (30) et/ou entre la seconde plaque (22) et le rotor (30) pour limiter la quantité d'air non filtré entrant à l'intérieur du générateur électrique (11).

4. Éolienne (1) selon l'une quelconque des revendications 1 à 3 précédentes, dans laquelle le carter (12) possède au moins une seconde plaque (22) à l'extrémité d'entraînement (32) pour séparer un intérieur du générateur électrique (11) par rapport à un environnement extérieur, le circuit de refroidissement (100) incluant au moins une seconde entrée (102) sur la seconde plaque (22) pour laisser de l'air provenant de l'environnement extérieur entrer à l'intérieur du générateur électrique (11), la seconde entrée (102) étant munie d'un filtre respectif (25).

5. Éolienne (1) selon la revendication 4, dans laquelle l'environnement extérieur est compris entre un moyeu (17) et un nez de rotor (18) de l'éolienne (1).

6. Éolienne (1) selon l'une quelconque des revendications précédentes, dans laquelle la première plaque (21) et/ou la seconde plaque (22) sont orthogonales à l'axe longitudinal (Y) .

7. Éolienne (1) selon l'une quelconque des revendications précédentes, dans laquelle le circuit de refroidissement (100) comprend au moins une première cavité de refroidissement (36) à l'intérieur du carter (12) du générateur électrique (11), entre la première plaque (21) et le stator (20).

8. Éolienne (1) selon l'une quelconque des revendications précédentes, dans laquelle le circuit de refroidissement (100) comprend une seconde cavité de refroidissement (37) à l'intérieur du carter (12) du générateur électrique (11), entre la seconde plaque (22) et le stator (20).

9. Éolienne (1) selon l'une quelconque des revendications précédentes, dans laquelle l'éolienne (1) possède un entrefer (35) entre le stator (20) et le rotor (30), le circuit de refroidissement (100) étant mis en forme pour canaliser le milieu de refroidissement fluide vers l'entrefer (35) entre le stator (20) et le rotor (30).

10. Éolienne (1) selon l'une quelconque des revendications précédentes, dans laquelle le circuit de refroidissement (100) comprend un tuyau d'échappement (110) pour laisser le milieu de refroidissement chauffé s'écouler vers l'environnement de sortie.

11. Éolienne (1) selon la revendication 10, dans laquelle le tuyau d'échappement (110) est ménagé sur la première plaque (21) .

12. Éolienne (1) selon l'une quelconque des revendications 7 à 11, dans laquelle la première plaque (21) et/ou la seconde plaque (22) comprennent des portes de trappe (29) pour permettre un accès à la première cavité de refroidissement (36) et/ou à la seconde cavité de refroidissement (37) du carter (12).

13. Éolienne (1) selon la revendication 12, dans laquelle l'un quelconque des filtres (25) est monté sur l'une des portes de trappe (29).

14. Éolienne (1) selon l'une quelconque des revendications précédentes, dans laquelle le générateur électrique (11) est un générateur à entraînement direct ayant le moyeu (17) directement attaché à l'extrémité d'entraînement du générateur électrique (11).
